# EUROPEAN PATENT APPLICATION

(11) **EP 4 763 491 A1**
(43) Date of publication of application: **24.06.2026**
(21) Application number: 24307181.8
(22) Date of filing: 19.12.2024
(51) Int. Cl.: B29D 11/00

(54) **METHOD FOR MANUFACTURING AN OPHTHALMIC ARTICLE THROUGH TAPING**

(71) Applicant: Essilor International, 94220 Charenton-Le-Pont (FR)
(72) Inventor: MOREAU, Patrick, 10120 BANGKOK (TH)
(74) Representative: Plasseraud IP

(57) **Abstract**

The present disclosure relates to a method for manufacturing an ophthalmic article, comprising:
- positioning (S100) a wafer from a first mold part;
- adhering (S200) a first adhesive tape to both the edge of the wafer and the edge of the first mold through a first adhesive surface thereby forming a first mold cavity and obtaining a partial mold assembly with an assembly edge;
- positioning (S300) a second mold part relatively to the partial mold assembly;
- adhering (S400) a second adhesive tape to both the assembly edge and the edge of the second mold through a second adhesive surface; thereby forming a second mold cavity and obtaining a full mold assembly;
- filling (S600, S650) the first and second mold cavities with polymerizable materials; and
- polymerizing (S700) the polymerizable materials.

## Description

### Technical Field

This disclosure pertains to the field of ophthalmic lens manufacturing, and in particular to such manufacturing methods for casting thermoset ophthalmic lenses. More in particular, the present disclosure pertains to the field of manufacturing method for casting thermoset ophthalmic lenses having a wafer embedded therein.

### Background Art

Myopia is a prevalent disorder: in 2000 about 23% of the world population (i.e. 1.4 billion people) were nearsighted and according to the Brien Holden Vision Institute in Australia, 50% of the global population will be myopic by 2050. It is known that high myopia increases the risk of sight-threatening problems such as retinal detachment, cataracts and glaucoma. Hence, slowing myopia progression in children is crucial. Studies conducted in recent years show that using microlenses on the front face (convex surface) of a regular single vision lens to introduce myopic defocus in the periphery effectively slows myopia progression. Unfortunately, casting thermoset lenses with surface microlenses remains challenging.

The thermoset lens casting method makes use of a mold assembly comprising two mold parts sealed together with a gasket or adhesive tape to form a cavity between the two mold parts and the cavity is filled with a polymerizable material. The mold assembly is then placed in an oven and the polymerizable material is cured for several hours. Eventually, the resulting lenses are collected after demolding.

Unlike the continuous injection molding method, the thermoset lens casting method is lengthy due to the time required to cure the polymerizable material fully. It is thus carried out in batches requiring a high number of molds to meet the volume demand and to reach the cost targets. Typically, the material used for the molds is glass and/or nickel. To save cost, the molds must be cleaned between batches so that they can be reused. Although cheaper than using new molds each time, reusing the molds requires an extensive cleaning process.

In the case of thermoset lenses with surface microstructures such as microlenses or Fresnel rings, molds with negative microstructures on either one of the faces of the lenses are required. Unfortunately, manufacturing such molds using glass is not yet technically feasible even with micromachining due to the precision needed for the microstructures. As for molds made of nickel, their manufacturing is excessively pricey either through micromachining or replication of a master mold, in particular when considering the large number of molds required for a batch of casting.

Therefore, a cost effective solution for providing ophthalmic lenses with myopic defocus is still needed to make them widely accessible, even to the indigents, and eventually overcome the myopia epidemic.

### Summary

This disclosure improves the situation.

The present invention provides a method for manufacturing an ophthalmic article, comprising:
- positioning a wafer at a first predetermined distance from a first mold part; wherein the wafer comprises a first wafer face, a second wafer face opposite the first wafer face and a wafer edge joining the first and second wafer faces; wherein the first mold part comprises a first molding surface and a first mold edge extending from the first molding surface; wherein positioning results in the first wafer face facing the first molding surface;
- adhering a first adhesive tape to both the wafer edge and the first mold edge through a first adhesive surface thereof; wherein the first adhesive surface extends between the wafer edge and the first mold edge; thereby forming a first mold cavity defined by the first wafer face, the first molding face and the first adhesive surface and obtaining a partial mold assembly with an assembly edge;
- positioning a second mold part having a second molding surface and a second mold edge extending from the second molding surface at a second predetermined distance to the partial mold assembly so that the second wafer face faces the second molding surface;
- adhering a second adhesive tape to both the assembly edge and the second mold edge through a second adhesive surface thereof; wherein the second adhesive surface extends between the assembly edge and the second mold edge; thereby forming a second mold cavity defined by the second wafer face, the second molding face and the second adhesive surface and obtaining a full mold assembly;
- filling the first mold cavity with a first polymerizable material;
- filling the second mold cavity with a second polymerizable material; and
- polymerizing the first and second polymerizable materials.

Although this method was developed as a solution to encapsulate an ophthalmic wafer having microstructures between two lens substrates, it can be advantageously used also for any ophthalmic article having an ophthalmic wafer of any kind between two lens substrates.

Other optional and non-limiting features are as follows.

Positioning the wafer at the first predetermined distance from the first mold part may comprise centering the wafer relatively to the first mold part and bringing the wafer to the first predetermined distance from the first mold part.

In such case, positioning the wafer at the first predetermined distance from the first mold part may optionally be carried out through a positioning tool comprising two parts: one top part adapted to engage with a convex surface and one bottom part adapted to engage with a concave surface; wherein each of the convex surface and the concave surface being one of the first face and the first molding surface.

In this latter case, positioning the wafer at the first predetermined distance from the first mold part may optionally comprise determining a first reference distance between the top part and the convex surface and determining a second reference distance between the bottom part and the concave surface.

In this latter case, bringing the wafer to the first predetermined distance from the first mold part may optionally take into account the first reference distance and the second reference distance.

The top tool part may comprise a centering ring.

The bottom part may comprise a support plate, and optionally an edge ring.

In all these cases, positioning the second mold part at the second predetermined distance from the partial mold assembly may optionally comprise centering the second mold part relatively to the partial mold assembly and bringing the second mold part to the second predetermined distance from the partial mold assembly.

In this latter case, positioning the wafer at the first predetermined distance from the first mold part may optionally be carried out through a positioning tool comprising two parts: one top part adapted to engage with a convex surface and one bottom part adapted to engage with a concave surface; wherein each of the convex surface and the concave surface being one of the second face and the second molding surface.

In this latter case, positioning the second mold part at the second predetermined distance from the partial mold assembly may optionally comprises determining a third reference distance between the top part and the convex surface and determining a fourth reference distance between the bottom part and the concave surface.

In this latter case, bringing the second mold part to the second predetermined distance from the partial mold assembly may optionally consider the third reference distance and the fourth reference distance.

The top tool part may comprise a centering ring.

The bottom part may comprise a support plate, and optionally an edge ring.

In all these cases, the first molding surface may have a convex surface, and the second molding surface a concave surface. In such case, the first wafer face is a concave surface, and the second wafer face is a convex surface.

Alternatively, the first molding surface may be a concave surface, and the second molding surface may be a convex surface. In such case, the first wafer face may be a convex surface, and the second wafer face may be a concave surface.

In all these cases, filling the first mold cavity and filling the second mold cavity may optionally be carried out simultaneously.

In all these cases, the first adhesive tape may optionally be applied around the wafer edge and the first mold edge from a first tape head to a first tape tail covering the first tape head; the second adhesive tape around the assembly edge and the second mold edge from a second tape head to a second tape tail covering the second tape head; wherein the second tape head does not cover the first tape tail.

In this latter case, the method may optionally comprise prior to filling the first mold cavity, removing the first tape tail and prior to filling the second mold cavity, removing the second tape tail.

In this latter case, removing the first tape tail and removing the second tape tail may be caried out simultaneously. Alternatively, removing the second tape tail may be carried out prior to removing the first tape tail.

In all these cases, the first polymerizable material and the second polymerizable material may be polymerized simultaneously.

In all these cases, the first polymerizable material and the second polymerizable material may be the same. Alternatively, the first polymerizable material and the second polymerizable material are different.

In all these cases, the wafer may comprise microstructures. In such case, the microstructures may optionally be myopia controlling microstructures or polarizing microstructures. The microstructures may be at least one of microlenses and Fresnel rings.

### Brief Description of Drawings

Other features, details and advantages will be shown in the following detailed description and on the figures, on which:
Fig. 1 is cross-section of a schematic illustration of a mold assembly according to the invention;
Fig. 2 is cross-section of a schematic illustration of an exemplified embodiment of the mold assembly according to the invention;
Fig. 3 is cross-section of a schematic illustration of another exemplified embodiment of the mold assembly according to the invention;
Fig. 4 is a diagram illustrating the method for manufacturing an ophthalmic article according to the present invention;
Fig. 5 is a diagram illustrating the positioning of the wafer at a first predetermined distance from the first mold part;
Fig. 6 is a diagram illustrating the positioning of the second mold part at a second predetermined distance from the partial mold assembly;
Fig. 7 illustrates an exemplified embodiment of the method for manufacturing an ophthalmic article according to the present invention through the mold assembly of Fig. 2; and
Fig. 8 illustrates another exemplified embodiment of the method for manufacturing an ophthalmic article according to the present invention through the mold assembly of Fig. 3.

### Description of Embodiments

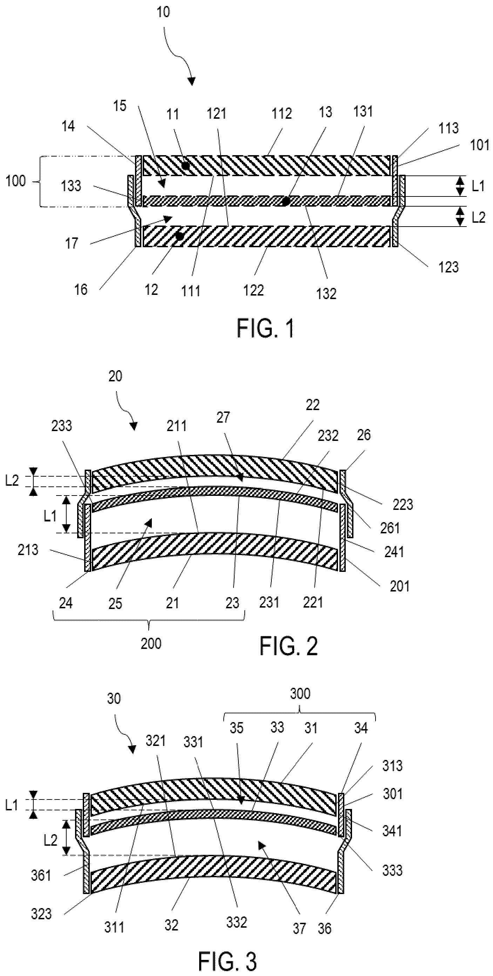

A mold assembly according to the invention will be described in further details hereafter with reference to Fig. 1 to Fig. 3.

Such mold assembly **10** comprises a first mold part **11,** a second mold part **12,** a wafer **13,** a first adhesive tape **14** and a second adhesive tape **16.** The first mold part **11,** the wafer **13** and the first adhesive tape **14** form together a first mold cavity **15** and will be referred together as a partial mold assembly **100** having an assembly edge **101.** The second mold part **12,** the wafer **13** and the second tape **16** form together a second mold cavity **17.**

The first mold part **11** comprises a first molding surface **111** and a first mold edge **113** extending from the first molding surface **111.** It may also comprise a non-molding surface **112** opposite the first molding surface **111.** In such case, the first mold edge **113** connects the first molding surface **111** and the non-molding surface **112** of the first mold part **11.**

The first mold part **11** preferably has a general shape with rotational symmetry so that the axis of rotation passes through the first molding surface **111** and the non-molding surface **112** of the first mold part **11.**

The material of the first mold part **11** may be chosen from glass, metal and plastic.

The second mold part **12** comprises a second molding surface **121** and a second mold edge **123** extending from the second molding surface **121.** It may also comprise a non-molding surface **122** opposite the second molding surface **121.** In such case, the second mold edge **123** connects the second molding surface **121** and the non-molding surface **122** of the second mold part **12.**

The second mold part **12** preferably has a general shape with rotational symmetry so that the axis of rotation passes through the second molding surface **121** and the non-molding surface **122** of the second mold part **11.**

The material of the second mold part **12** may be chosen from glass, metal and plastic.

The term "wafer" refers to a layer of material of optical quality that is intended to be included into an ophthalmic article such as an ophthalmic lens, notably between two lens substrates. This layer of material typically provides the ophthalmic article with a function, mostly optical function, in addition to the functions of the lens substrates. An example of such functions is myopia controlling. Another example of such functions is polarization. However, the invention is not limited to these exemplified functions; the function may be any useful function obtainable through an ophthalmic wafer.

The functions can be provided in several ways. One way is to provide the wafer with microstructures, such as microlenses and Fresnel rings. More than one type of microstructures can be used at the same time on one wafer. For example, both microlenses and Fresnel rings may be provided on the same wafer.

The wafer **13** comprises a first wafer face **131,** a second wafer face **132** opposite the first wafer face **131,** and a wafer edge **133** joining the first wafer face **131** and the second wafer face **132.** The first wafer face **131** faces the first molding surface **111** while the second wafer face **132** faces the second molding surface **121.**

The wafer **13** may be a single layer. In such case, when microstructures are provided, they may be provided on either side of the single layer or both.

The wafer **13** may be a multilayer. In such case, when microstructures are provided, they may be provided in any of the layers, including the outmost layers or the interface between two layers.

The wafer **13** preferably has a general shape with rotational symmetry so that the axis of rotation passes through the first wafer face **131** and the second wafer face **132.**

The material of the wafer **13** may be chosen from one or several thermoplastic materials such as polycarbonate (PC), alicyclic polycarbonate copolymer, poly(methyl methacrylate) (PMMA), poly(methyl methacrylimide) (PMMI), polyamide (PA), polyester, copolyester, polysulfone (PSU), cellulose triacetate (TAC), thermoplastic polyurethane (TPU), and cyclic olefin copolymer (COC). The ophthalmic wafer may also be made of one or several thermoset materials such as polyurethane, allyl diglycol carbonate, polythiourethane, episulfur polymers, epoxy, poly(meth)acrylates, polythiomethacrylates. This list of compounds does not limit the choice of thermoplastic or thermoset materials which could be used for the process for making the wafer. When the ophthalmic wafer is made of a plurality of layers, in one embodiment, all the layers may be made of thermoplastic materials. In another embodiment, all the layers may be made of thermoset materials. In still another embodiment, the wafer may be made of a combination of layers made of thermoplastic materials and layers made of thermoset materials.

The distance between the first molding surface **111** and the first wafer face **131** is shown in the figures as **L1.** The distance between the second molding surface **111** and the second wafer face **131** is shown in the figures as **L2.** These distances are taken at the center of the mold assembly **10,** preferably along the axis of rotational symmetry.

The first adhesive tape **14** comprises a first adhesive surface **141** which adheres to the wafer edge **133** and the first mold edge **113,** so that the first adhesive surface **141** extends between the wafer edge **133** and the first mold edge **113** in its width direction. The first adhesive tape **14** extends in the perpendicular direction (longitudinal direction) around the wafer edge **133** and the first mold edge **113** from a first tape head to a first tape tail. Preferably, the first tape tail covers the first tape head.

The second adhesive tape **16** comprises a second adhesive surface **161** adhering to the second mold edge **123** and the assembly edge **101,** so that the second adhesive surface **161** extends between the second mold edge **123** and the assembly edge **101** in its width direction. The second adhesive tape **16** extends in the perpendicular direction (longitudinal direction) around the assembly edge **101** and the second mold edge **123** from a second tape head to a second tape tail. Preferably, the second tape tail covers the second tape head.

The second tape head may or may not cover the first tape tail but preferably does not.

Fig. 2 shows one particular embodiment for the mold assembly. Similar elements between Fig. 1 and Fig. 2 are given similar reference signs, with the only different being the first digit, which is "1" is Fig. 1 and "2" in Fig. 2. The difference between the mold assembly of Fig. 1 and that of Fig. 2 is that in Fig. 1 the shapes of the different surfaces and faces are not specified (dashed lines), by contrast with those of Fig. 2.

In this embodiment, the first molding surface **211** of the first mold part **21** is convex and the non-molding surface **212** thereof is concave. The second molding surface **221** of the second mold part **22** is concave while its non-molding surface **222** is convex. The first wafer face **231** is concave while the second wafer face **232** is convex.

Fig. 3 shows one particular embodiment for the mold assembly. Similar elements between Fig. 1 and Fig. 3 are given similar reference signs, with the only difference being the first digit, which is "1" is Fig. 1 and "3" in Fig. 3. The difference between the mold assembly of Fig. 1 and that of Fig. 3 is that in Fig. 1 the shapes of the different surfaces and faces are not specified (dashed lines), by contrast with those of Fig. 3.

In this embodiment, the first molding surface **311** of the first mold part **31** is concave and the non-molding surface **312** thereof is convex. The second molding surface **321** of the second mold part **32** is convex while its non-molding surface **322** is concave. The first wafer face **331** is convex while the second wafer face **332** is concave.

The invention is not limited to these exemplified embodiments. Any of the surfaces and faces may be concave or convex independently from each other.

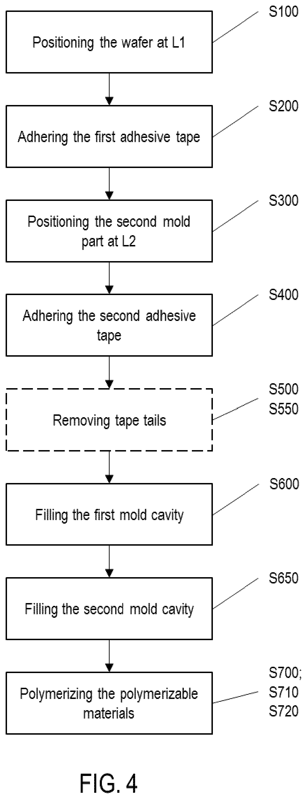

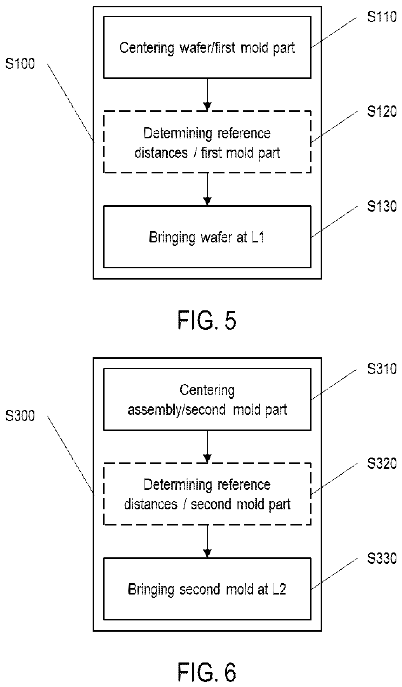

A method for manufacturing an ophthalmic article according to the invention will be described hereafter with reference to Fig. 4 to 6. In the following, description is provided with reference to the mold assembly **10** of Fig. 1. However, it can be easily read with reference to the embodiments of Fig. 2 and Fig. 3 by changing the first digit of the reference signs to the corresponding one, i.e. "2" for Fig. 2 and "3" for Fig. 3.

The method comprises:
- positioning **S100** a wafer **13** at a first predetermined distance **L1** from a first mold part **11;** wherein the wafer **13** comprises a first wafer face **131,** a second wafer face **132** opposite the first wafer face and a wafer edge **133** joining the first and second wafer faces **131, 132**; wherein the first mold part **11** comprises a first molding surface **111** and a first mold edge **113** extending from the first molding surface **111;** wherein positioning results in the first wafer face **131** facing the first molding surface **111;**
- adhering **S200** a first adhesive tape **14** to both the wafer edge **133** and the first mold edge **113** through a first adhesive surface **141** thereof; wherein the first adhesive surface **141** extends between the wafer edge **133** and the first mold edge **113;** thereby forming a first mold cavity **15** defined by the first wafer face **131,** the first molding face **111** and the first adhesive surface **141** and obtaining a partial mold assembly **100** with an assembly edge **101;**
- positioning **S300** a second mold part **12** having a second molding surface **121** and a second mold edge **123** extending from the second molding surface **121** at a second predetermined distance **L2** to the partial mold assembly **100** so that the second wafer face **132** faces the second molding surface **121;**
- adhering **S400** a second adhesive tape **16** to both the assembly edge **101** and the second mold edge **123** through a second adhesive surface **161** thereof; wherein the second adhesive surface **161** extends between the assembly edge **101** and the second mold edge **123;** thereby forming a second mold cavity **17** defined by the second wafer face **132,** the second molding face **121** and the second adhesive surface **161** and obtaining a full mold assembly **10;**
- filling **S600** the first mold cavity **15** with a first polymerizable material;
- filling **S650** the second mold cavity **17** with a second polymerizable material;
- polymerizing **S700** the first and second polymerizable materials.

Positioning **S100** the wafer **13** at the first predetermined distance **L1** from the first mold part **11** may comprise centering **S110** the wafer **13** relatively to the first mold part **11** and bringing **S130** the wafer **13** to the first predetermined distance **L1** from the first mold part **11.** One option is to use a positioning tool **40.** This positioning tool **40** may comprise two parts: one top part **41** and one bottom part **42.** Here, the relative terms "top" and "bottom" refer to the position of the parts during operation.

The top part **41** may be adapted to engage with a convex surface. For example, the top part **41** of the positioning tool **40** may comprise a centering ring. During positioning **S100** the wafer **13** at the first predetermined distance **L1** from the first mold part **11,** the convex surface may be one of the second face **132** of the wafer **13** and a non-molding surface **112** of the first mold part **11** opposite the first molding surface **111.** For example, in the embodiment of Fig. 2, the convex surface is the second face **232** of the wafer **23;** in the embodiment of Fig. 3, the convex surface is the non-molding surface **312** of the first mold part **31.**

The bottom part **42** may be adapted to engage with a concave surface. For example, the bottom part comprises a support plate **421,** and optionally an edge ring **422.** The concave surface may be one of the second face **132** of the wafer **13** and the non-molding surface **112** of the first mold part **11.** For example, in the embodiment of Fig. 2, the concave surface is the non-molding surface **212** of the first mold part **21;** in the embodiment of Fig. 3, the concave surface is the second face **232** of the wafer **23.**

Positioning **S100** the wafer **13** at the first predetermined distance **L1** from the first mold part **111** may further comprise determining **S120** a first reference distance and a second reference distance. The first reference distance may be for example between the top part **41** of the positioning tool **40** and one among the wafer **13** and the first mold part **11;** for example, the one with the convex surface. The second reference distance may be between the bottom part **42** and the other one among the wafer **13** and the first mold part **11;** for example, the one with the concave surface.

In such case, bringing **S130** the wafer **13** to the first predetermined distance L1 from the first mold part **111** takes into account the first reference distance and the second reference distance.

Adhering **S200** the first adhesive tape **14** to both the wafer edge **133** and the first mold edge **113** may comprise applying the first adhesive tape **14** around the wafer edge **133** and the first mold edge **113** from a first tape head to a first tape tail covering the first tape head.

Positioning **S300** the second mold part **12** at the second predetermined distance **L2** from the partial mold assembly **100** may comprise centering **S310** the second mold part **12** relatively to the partial mold assembly **100** and bringing **S330** the second mold part **12** to the second predetermined distance from the partial mold assembly. Again, one option is to use a positioning tool **40** such as the one described above.

When the top part **41** is adapted to engage with a convex surface, during positioning **S300** the second mold part **12** at the second predetermined distance **L2** from the partial mold assembly **100,** the convex surface may be one of a non-molding surface **122** of the second mold part **12** opposite the second molding surface **121** and the non-molding surface **112** of the first mold part **11.** For example, in Fig. 2, the convex surface is the non-molding surface **222** of the second mold part **22;** in Fig. 3, the convex surface is the non-molding surface **312** of the first mold part **31.**

When the bottom part **42** is adapted to engage with a concave surface during positioning **S300** the second mold part **12** at the second predetermined distance **L2** from the partial mold assembly **100,** the concave surface may be one of a non-molding surface **122** of the second mold part **12** opposite the second molding surface **121** and the non-molding surface **112** of the first mold part **11.** For example, in Fig. 2, the concave surface is the non-molding surface **212** of the first mold part **21;** in Fig. 3, the concave surface is the non-molding surface **322** of the second mold part **32.**

Positioning **S300** the second mold part **12** at the second predetermined distance **L2** from the partial mold assembly **100** may comprise determining **S320** a third reference distance and a fourth reference distance. The third reference distance may be for example between the top part **41** of the positioning tool **40** and one among the partial mold assembly **100** and the second mold part **12;** for example, the one with the convex surface. The fourth reference distance may be for example between the bottom part **42** of the positioning tool **40** and one among the partial mold assembly **100** and the second mold part **12;** for example, the one with the concave surface.

In such case, bringing **S330** the second mold part to the second predetermined distance **L2** from the partial mold assembly **100** considers the third reference distance and the fourth reference distance.

Adhering **S400** the second adhesive tape **16** to both the assembly edge **101** and the second mold edge **123** may comprise applying the second adhesive tape **16** around the assembly edge **101** and the second mold edge **123** from a second tape head to a second tape tail covering the second tape head. Preferably, the second tape head does not cover the first tape tail.

The method may comprise before filling **S600** the first mold cavity **15,** removing **S500** the first tape tail. The method may comprise before filing **S650** the second mold cavity **17,** removing **S550** the second tape tail. Removing **S500** the first tape tail and removing **S550** the second tape tail may be carried out simultaneously. Alternatively, removing **S550** the second tape tail is carried out prior to removing **S500** the first tape tail.

Preferably, filling **S600** the first mold cavity **15** and filling **S650** the second mold cavity **17** are carried out simultaneously.

The first polymerizable material may have a high or low refractive index once cured. For example, the first polymerizable composition comprises thermoplastic materials such as polycarbonate (PC) or polymethyl metacrylate (PMMA), or thermoset materials such as thiourethane.

Likewise, the second polymerizable material may have a high or low refractive index once cured. For example, the second polymerizable composition comprises thermoplastic materials such as polycarbonate (PC) or polymethyl metacrylate (PMMA), or thermoset materials such as thiourethane.

The first polymerizable material and the second polymerizable material may be the same. Alternatively, the first polymerizable material and the second polymerizable material may be different.

Polymerizing **S700** the first and second polymerizable materials may comprise polymerizing the first and second polymerizable materials simultaneously. Alternatively, Polymerizing **S700** the first and second polymerizable materials may comprise successively polymerizing **S710** the second polymerizable material and polymerizing **S720** the first polymerizable material.

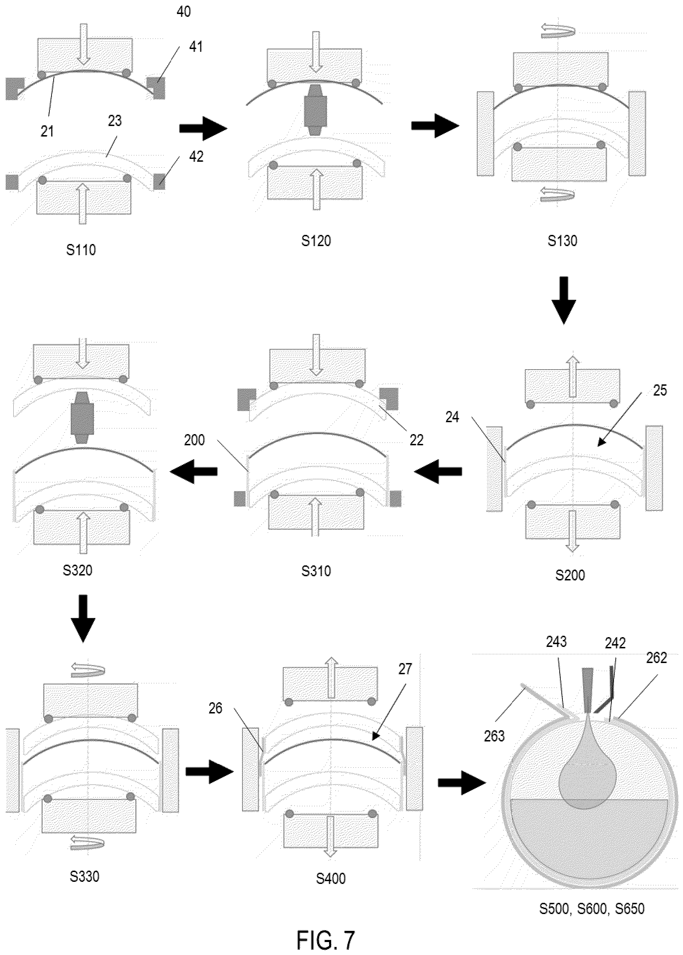

One embodiment of this method will be described with reference to Fig. 7. This embodiment of the method results in the mold assembly of Fig. 2.

In this embodiment, positioning **S100** the wafer **23** at the first predetermined distance **L1** from the first mold part **21** makes use of the positioning tool **40** as described above. The top part **41** of the positioning tool **40** engages the second wafer face **232** and the bottom part **42** of the positioning tool **40** engages the non-molding surface **212** of the first mold part **21** throughout the positioning **S100** of the wafer **23** at the first predetermined distance **L1** from the first mold part **21.**

After adhering the first adhesive tape **24** to the wafer edge **233** and the first mold edge **213,** thus forming the partial mold assembly **200,** the top part **41** and the bottom part **42** disengage from the partial mold assembly **200.**

Then the top part **41** of the positioning tool **40** engages the second mold part **22** while the bottom part **42** of the positioning tool **40** engages the partial mold assembly **200** through the non-molding surface **213** of the first mold part **21.**

After adhering the second adhesive tape **26** to the assembly edge **203** and the second mold edge **223,** thus forming the mold assembly **20,** the top part **41** and the bottom part **42** disengage from the mold assembly **20** before removing **S500** the tape tails, filling **S600, S650** and polymerizing **S700** are carried out.

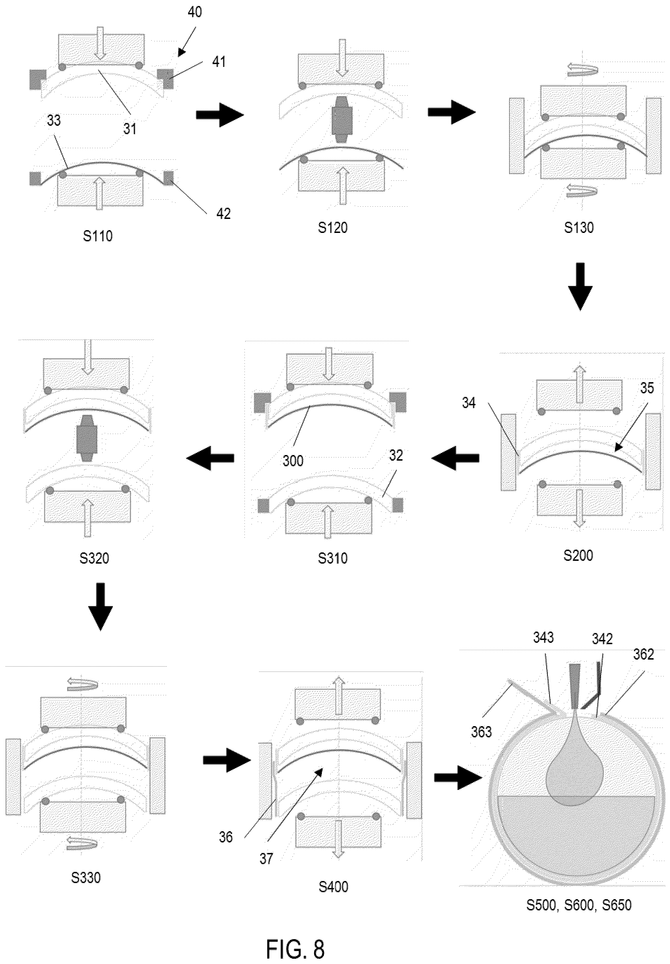

Another embodiment of the method will be described with reference to Fig. 8. This embodiment of the method results in the mold assembly of Fig. 3.

In this embodiment, positioning **S100** the wafer **33** at the first predetermined distance **L1** from the first mold part **31** makes use of the positioning tool **40** as described above. The top part **41** of the positioning tool **40** engages the non-molding surface **312** of the first mold part **31** and the bottom part **42** of the positioning tool **40** engages the second wafer face **332** throughout the positioning **S100** of the wafer **33** at the first predetermined distance **L1** from the first mold part **31.**

After adhering the first adhesive tape **34** to the wafer edge **333** and the first mold edge **313,** thus forming the partial mold assembly **300,** the top part **41** and the bottom part **42** disengage from the partial mold assembly **300.**

Then the top part **41** of the positioning tool **40** engages the partial mold assembly **300** through the non-molding surface **312** of the first mold part **31** while the bottom part **42** of the positioning tool **40** engages the non-molding surface **322** of the second mold part **32.**

After adhering the second adhesive tape **26** to the assembly edge **303** and the second mold edge **323,** thus forming the mold assembly **30,** the top part **41** and the bottom part **42** disengage from the mold assembly **30** before removing **S500** the tape tails, filling **S600, S650** and polymerizing **S700** are carried out.

## Claims

1. A method for manufacturing an ophthalmic article, comprising:
- positioning (S100) a wafer (13; 23) at a first predetermined distance (L1) from a first mold part (11; 21); wherein the wafer comprises a first wafer face (131; 231), a second wafer face (132; 232) opposite the first wafer face and a wafer edge (133; 233) joining the first and second wafer faces; wherein the first mold part (11; 21) comprises a first molding surface (111; 211) and a first mold edge (113; 213) extending from the first molding surface; wherein positioning results in the first wafer face facing the first molding surface;
- adhering (S200) a first adhesive tape (14; 24) to both the wafer edge and the first mold edge through a first adhesive surface (141; 241) thereof; wherein the first adhesive surface extends between the wafer edge and the first mold edge; thereby forming a first mold cavity (15; 25) defined by the first wafer face, the first molding face and the first adhesive surface and obtaining a partial mold assembly (100; 200) with an assembly edge (101; 201);
- positioning (S300) a second mold part (12; 22) having a second molding surface (121; 221) and a second mold edge (123; 223) extending from the second molding surface at a second predetermined distance (L2) to the partial mold assembly so that the second wafer face faces the second molding surface;
- adhering (S400) a second adhesive tape (16; 26) to both the assembly edge and the second mold edge through a second adhesive surface (161; 261) thereof; wherein the second adhesive surface extends between the assembly edge and the second mold edge; thereby forming a second mold cavity (17; 27) defined by the second wafer face, the second molding face and the second adhesive surface and obtaining a full mold assembly (10; 20);
- filling (S600) the first mold cavity with a first polymerizable material;
- filling (S650) the second mold cavity with a second polymerizable material;
- polymerizing (S700) the first and second polymerizable materials.

2. The method of claim 1, wherein positioning the second mold part at the second predetermined distance from the partial mold assembly comprises centering the second mold part relatively to the partial mold assembly and bringing the second mold part to the second predetermined distance from the partial mold assembly.

3. The method of claim 2, wherein positioning the wafer at the first predetermined distance from the first mold part is carried out through a positioning tool comprising two parts: one top part adapted to engage with a convex surface and one bottom part adapted to engage with a concave surface; wherein each of the convex surface and the concave surface being one of the second face and the second molding surface.

4. The method of claim 3, wherein positioning the second mold part at the second predetermined distance from the partial mold assembly further comprises determining a third reference distance between the top part and the convex surface and determining a fourth reference distance between the bottom part and the concave surface.

5. The method of claim 4, wherein bringing the second mold part to the second predetermined distance from the partial mold assembly considers the third reference distance and the fourth reference distance.

6. The method of any one of claims 1 to 5, wherein filling the first mold cavity and filling the second mold cavity are carried out simultaneously or successively.

7. The method of any one of claims 1 to 6, wherein the first adhesive tape is applied around the wafer edge and the first mold edge from a first tape head to a first tape tail covering the first tape head; wherein the second adhesive tape is applied around the assembly edge and the second mold edge from a second tape head to a second tape tail covering the second tape head; and wherein the second tape head does not cover the first tape tail.

8. The method of claim 7, further comprising prior to filling the first mold cavity, removing the first tape tail and prior to filling the second mold cavity, removing the second tape tail, wherein removing the first tape tail and removing the second tape tail are carried out simultaneously or successively.

9. The method of any one of claims 1 to 8, wherein the wafer comprises microstructures.

10. A mold assembly comprising:
a first mold part (11; 21) with a first molding surface (111; 211) and a first mold edge (113; 213) extending from the first molding surface;
a second mold part (12; 22) with a second molding surface (121; 221) and a second mold edge (123; 223) extending from the second molding surface;
a wafer (13; 23) with a first wafer face (131) facing the first molding surface at a first predetermined distance (L1) thereof, a second wafer face (132) opposite the first wafer face and facing the second molding surface at a second predetermined distance (L2) thereof, and a wafer edge (133) joining the first and second wafer faces;
a first adhesive tape (14; 24) with a first adhesive surface (141; 241) adhering to the wafer edge and the first mold edge, the first adhesive surface extending between the wafer edge and the first mold edge;
wherein the wafer, the first mold part and the first adhesive tape form together a partial mold assembly (100; 200) with an assembly edge (101; 201) and a first mold cavity (15; 25);
the mold assembly further comprising:
a second adhesive tape (16; 26) with a second adhesive surface (161; 261) adhering to the second mold edge and the assembly edge, the second adhesive surface extending between the second mold edge and the assembly edge, thus forming a second mold cavity (17; 27) with the wafer (13; 23) and the second mold part (12; 22).

11. The mold assembly of claim 10, wherein the first molding surface is a convex, respectively concave, surface and the second molding surface is a concave, respectively convex, surface; and wherein the first wafer face is a concave, respectively convex, surface and the second wafer face is a convex, respectively concave, surface.

12. The mold assembly of claim 10 or claim 11, wherein the first adhesive tape runs around the wafer edge and the first mold edge from a first tape head to a first tape tail covering the first tape head; wherein the second adhesive tape runs around the assembly edge and the second mold edge from a second tape head to a second tape tail covering the second tape head; and wherein the second tape head does not cover the first tape tail.

13. The mold assembly of any one of claims 10 to 12, wherein the wafer comprises microstructures.

14. The mold assembly of claim 13, wherein the microstructures are myopia controlling microstructures or polarizing microstructures.

15. The mold assembly of claim 13 or claim 14, wherein the microstructures are at least one of microlenses and Fresnel rings.
